# EUROPÄISCHE PATENTSCHRIFT

(11) **EP 2 455 761 B1**
(45) Veröffentlichungstag und Bekanntmachung des Hinweises auf die Patenterteilung: **08.08.2018**
(21) Anmeldenummer: 10192199.7
(22) Anmeldetag: 23.11.2010
(51) Int. Cl.: G01N 35/00, B01L 3/00, G06K 7/10

(54) **Verfahren zum Auffinden einer optischen Kennzeichnung auf einer Laboranalyse-Küvette**
Method for detecting an optical marking on a laboratory analysis vessel
Procédé de recherche d'une caractéristique optique sur une cuvette d'analyse de laboratoire

(43) Veröffentlichungstag der Anmeldung: 23.05.2012
(73) Patentinhaber: Hach Lange GmbH, 14163 Berlin (DE)
(72) Erfinder: Berssen, Johannes, 16341, Panketal (DE); Hanschke, Clemens, 14167, Berlin (DE)
(74) Vertreter: ter Smitten, Hans

(56) Entgegenhaltungen:
- DE-A1- 2 733 074
- DE-A1- 4 109 118
- US-A- 4 595 562

## Beschreibung

Die Erfindung bezieht sich auf ein Verfahren zum Auffinden einer optischen Kennzeichnung auf einer Laboranalyse-Küvette in einem Laboranalysegerät und auf eine Laboranalyse-Messanordnung zur Durchführung dieses Verfahrens.

Aus DE 41 09 118 C2 ist ein Verfahren zum automatischen Auswerten eines Probeninhaltsstoffes einer Wasserprobe bekannt, bei dem eine Laboranalyse-Küvette eine optische Kennzeichnung in Form eines Barcodes aufweist. Das zugehörige Laboranalysegerät weist einen Küvettenschacht mit einer Küvettendrehvorrichtung auf. Ferner ist in dem Küvettenschacht eine Lesevorrichtung vorgesehen, mit deren Hilfe der Küvetten- Barcode ausgelesen werden kann, während die Küvette durch die Küvettendrehvorrichtung in dem Küvettenschacht rotiert wird. Die Lesevorrichtung tastet punktförmig ab. Das Auffinden des Barcodes dauert unter ungünstigen Umständen relativ lange, da zunächst der Anfang des Barcodes gesucht werden muss.

Aus der DE 2733074 A ist eine Laboranalyse-Messanordnung bekannt, die eine Lesestation aufweist, die während einer Hub-Drehbewegung der Küvette ein Justierzeichen lokalisiert, aus dem sich die rotatorische und höhenmäßige Lage eines Kennzeichens ergibt.

Aufgabe der Erfindung vor diesem Hintergrund ist es, ein Verfahren zum schnelleren Auffinden einer optischen Kennzeichnung auf einer Laboranalyse-Küvette in einem Laboranalysegerät, und eine Laboranalyse-Messanordnung zur Durchführung dieses Verfahrens zu schaffen.

Die Aufgabe des erfindungsgemäß gelöst mit den Merkmalen des Anspruchs 1 beziehungsweise 7.

Das erfindungsgemäße Verfahren und die erfindungsgemäße Vorrichtung beziehen sich auf das Auffinden einer optischen Kennzeichnung auf einer ein Reagenz enthaltenden zylindrischen Laboranalysegerät-Küvette beziehungsweise auf eine Laboranalyse-Messanordnung bestehend aus einem Laboranalysegerät und einer Laboranalysegerät-Küvette zur Durchführung des vorgenannten Verfahrens .

Das Laboranalysegerät weist einen vertikalen Küvettenschacht auf, in den die Küvette zur Vornahme einer quantitativen Bestimmung eines Analyts in einer Wasserprobe eingesteckt wird.

Die Küvette weist mindestens eine optische Kennzeichnung auf, beispielsweise eine grafische Herkunfts-Kennzeichnung oder einen ein- oder zweidimensionalen Barcode. Die Kennzeichnung enthält Informationen über die Art und/oder die Herkunft der Küvette. Die Kennzeichnung ist dazu geeignet, von der Digitalkamera gelesen zu werden. Hierzu sollte die Kennzeichnung möglichst kontrastreich dargestellt sein. Ferner weist die Küvette einen axialen Lokalisierungsbalken mit einer konstanten Balkenbreite auf. Der Lokalisierungsbalken kann als weißer Streifen auf schwarzem Grund ausgebildet sein. Unter "axial" ist vorliegend stets vertikal zu verstehen, da die Küvette ausschließlich vertikal ausgerichtet in den entsprechend vertikal ausgerichteten Küvettenschacht eingesetzt werden kann.

Das Laboranalysegerät weist an dem Küvettenschacht eine Digitalkamera auf, die eine axiale, also vertikale, Auflösung von mehr als 10 Zeilen aufweist. Die Digitalkamera kann eine axial, also vertikal, ausgerichtete Zeilenkamera sein, kann jedoch auch eine Flächenkamera sein, die ein zweidimensionales Bild aufnehmen kann. Wenn die Digitalkamera als Zeilenkamera ausgebildet ist, ist unter einer Auflösung von mehr als 10 Zeilen die Anzahl an vertikal übereinander angeordneten Pixeln gemeint, die während der Drehung der Küvette durch die Küvettendrehvorrichtung entsprechend viele Zeilen aufnehmen können.

Wenn die Digitalkamera als Flächenkamera ausgebildet ist, kann das Einlesen eines zirkulären Abschnitts der Küvette grundsätzlich auch bei stillstehender Küvette erfolgen, wobei mehrere zirkuläre Abschnitte der Küvette intervallweise nacheinander erfasst werden, um auf diese Weise den gesamten Umfang der Küvette zu erfassen. Dieses Vorgehen ist insbesondere beim Einlesen der optischen Kennzeichnung vorteilhaft.

Gemäß dem Verfahren werden zunächst mindestens vier jeweils nicht aneinandergrenzende Zeilen der Digitalkamera eingelesen. Wenn die Digitalkamera als (vertikale) Zeilenkamera ausgebildet ist, wird die Küvette während des Einlesens mit konstanter Drehgeschwindigkeit durch die Küvettendrehvorrichtung gedreht. Wenn die Digitalkamera als Flächenkamera ausgebildet ist, kann bei diesen Verfahrensschritten eine einzige vertikale Spalte der Digitalkamera aktiviert werden, während alle übrigen Spalten nicht aktiv sind, so dass die Flächenkamera nur als vertikale Zeilenkamera genutzt wird. Alternativ können bei diesem Verfahrensschritt im Falle einer Flächenkamera auch mehrere Bilder der Küvette intervallartig aufgenommen werden, so dass auf diese Weise der gesamte Umfang der Küvette erfasst wird.

Beim Einlesen wird maximal jede zweite Zeile der Digitalkamera eingelesen, bevorzugt höchstens jede vierte Zeile, und besonders bevorzugt höchstens jede achte Zeile. Auf diese Weise wird die auszuwertende Datenmenge erheblich reduziert und kann der Lokalisierungsbalken schnell gefunden werden.

Erst wenn mindestens drei, besonders bevorzugt mindestens vier, zueinander benachbarte Einlese-Zeilen ungefähr übereinanderliegende Reflektionssignale des Lokalisierungsbalkens in der korrekten Balkenbreite feststellen, wird davon ausgegangen, dass der Lokalisierungsbalken gefunden wurde. Solange weniger als drei, besonders bevorzugt weniger als vier, zueinander benachbarte Einlese-Zeilen ungefähr übereinander liegende Reflektionssignale in der korrekten Balkenbreite feststellen, wird die Küvette weiter gedreht und wird der Lokalisierungsbalken weiter gesucht. Unter benachbarten Einlese-Zeilen sind bei diesem Verfahrensschritt die benachbarten aktiven Zeilen gemeint, also nur die Zeilen, die bei diesem Verfahrensschritt aktiv sind. Zwischen zwei benachbarten aktiven Zeilen können sich also eine oder mehrere nicht-aktive Zeilen befinden.

Der Lokalisierungsbalken steht in einer festen geometrischen Zuordnung zu der Kennzeichnung beziehungsweise zu den Kennzeichnungen auf der Küvette. Die geometrische Zuordnung lässt sich beispielsweise durch einen rotatorischen Winkel α,β und gegebenenfalls einen Vertikalvektor ausdrücken.

Nachdem der Lokalisierungsbalken gefunden wurde, wird die Küvette um den der geometrischen Zuordnung entsprechenden Winkel α,β derart gedreht, dass die Kennzeichnung beziehungsweise eine der Kennzeichnungen mit der Digitalkamera derart ausgerichtet ist, das die Kennzeichnung in dieser Position von der Digitalkamera schnell erfasst werden kann.

Zur Steuerung des Verfahrens ist in dem Laboranalysegerät eine Steuerung mit einem Kennzeichnungs-Suchmodul vorgesehen.

Mit dem vorbeschriebenen Verfahren und der vorgeschriebenen Vorrichtung wird das Suchen der optischen Kennzeichnung erheblich beschleunigt, da die hierbei auszuwertende Datenmenge, insbesondere im Falle einer als Flächenkamera ausgebildeten Digitalkamera, um ein Vielfaches reduziert wird.

Im folgenden wird unter Bezugnahme auf die Zeichnung ein Ausführungsbeispiel der Erfindung näher erläutert.

Es zeigen:
Figur 1 eine schematische Darstellung einer Laboranalysegerät-Messanordnung mit einem Laboranalysegerät und einer Laboranalysegerät-Küvette,
Figur 2 eine vergrößerte Darstellung der Laboranalysegerät-Küvette der Figur 1 einschließlich eines zwei Kennzeichnungen und einen Lokalisierungsbalken aufweisenden Etiketts, und
Figur 3 eine Abwicklung des Etiketts der Figur 2.

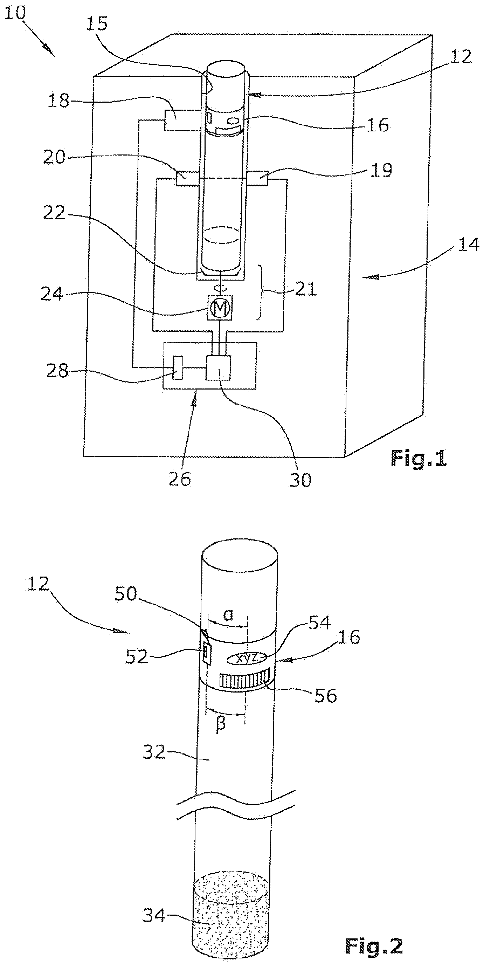

In der Figur 1 ist schematisch eine Laboranalyse-Messanordnung 10 dargestellt, die aus einem Laboranalysegerät 14 und einer Laboranalysegerät- Küvette 12 besteht. Die Messanordnung 10 dient der Bestimmung eines bestimmten Analyts in einer Wasserprobe. Hierzu enthält die Küvette 12 ein getrocknetes festes Reagenz 34, das mit dem betreffenden Analyt der in die Küvette 12 pipettierten Wasserprobe farbverändernd reagiert. Die Konzentration des Analyten in der Wasserprobe wird in dem Laboranalysegerät 14 transmissiv durch ein Fotometer 19; 20 bestimmt, das im wesentlichen von einem Fotometer-Sender 19 und -Empfänger 20 gebildet wird.

Das Laboranalysegerät 14 weist eine als Flächenkamera ausgebildete Digitalkamera 18 auf, die an der zylindrischen Seitenwand eines vertikalen Küvettenschachtes 15 angeordnet ist. Die Digitalkamera kann alternativ in einem Flächenmodus oder in einem Spaltenmodus betrieben werden, wie weiter unten noch erläutert wird.

Dem Küvettenschacht 15 ist eine Küvettendrehvorrichtung 21 zugeordnet, die aus einem Drehteller 22 im Bereich des Küvettenschachtes 15 und einem elektrischen Antriebsmotor 24 besteht, der den Drehteller 23 bei Bedarf dreht.

Ferner weist das Laboranalysegerät 14 eine digitale Geräte-Steuerung 26 mit einem Kennzeichnungs-Suchmodul 28 und einer Zentraleinheit 30 auf. Das Kennzeichnungs-Suchmodul 28 steuert das schnelle Auffinden und Einlesen einer Kennzeichnung 54,56 auf einem Etikett 16 der Küvette 12.

Die in der Figur 2 detailliert dargestellte Küvette 12 wird im wesentlichen von einem transparenten zylindrischen Küvettenkörper 32 aus Glas gebildet, dessen Boden verschlossen ist. Im Bodenbereich des Küvettenkörpers 32 ist das Reagenz 34 in fester getrockneter Form gelagert.

Auf den Küvettenkörper 32 ist ein wasserfestes Papier-oder Kunststoff-Etikett 16 aufgeklebt, das mit einem axialen Lokalisierungsbalken 50, einer ersten Kennzeichnung 54 und einer zweiten Kennzeichnung 56 schwarzweiß bedruckt ist. Der Lokalisierungsbalken 50 ist als weißer vertikaler Streifen 52 konstanter horizontaler Breite B auf schwarzem Grund ausgebildet. Die erste Kennzeichnung 54 ist auf der gleichen Höhe wie der Lokalisierungsbalken 50 auf dem Etikett angeordnet, und kann beispielsweise aus dem Firmennamen beziehungsweise dem so genannten Logo des Herstellers der Küvette 12 beziehungsweise des Laboranalysegerätes 14 bestehen. Die zweite Kennzeichnung 56 kann ein eindimensionaler oder zweidimensionaler Barcode sein, der in kodierter Form Informationen über den Hersteller, die Charge, die Haltbarkeit, das Reagenz beziehungsweise das zu analysierende Analyt enthalten.

Die beiden Kennzeichnungen in 54,56 stehen jeweils in fester und stets konstanter geometrischer Zuordnung zu dem Lokalisierungsbalken 50: die erste Kennzeichnung 54 liegt ungefähr auf der gleichen vertikaler Höhe wie der Lokalisierungsbalken 50 und seine mittlere Symmetrieachse ist um einen rotatorischen Winkel α versetzt zu dem Lokalisierungsbalken 50 angeordnet. Die zweite Kennzeichnung 56 ist sowohl axial versetzt als auch mit ihrer Symmetrieachse rotatorisch um den Winkel β versetzt zu dem Lokalisierungsbalken 50 angeordnet. Die geometrische Zuordnung ist bei allen Küvetten 12 stets gleich, unabhängig davon, welche Art von Reagenz 32 sie enthalten beziehungsweise für welches Analyt sie bestimmt sind.

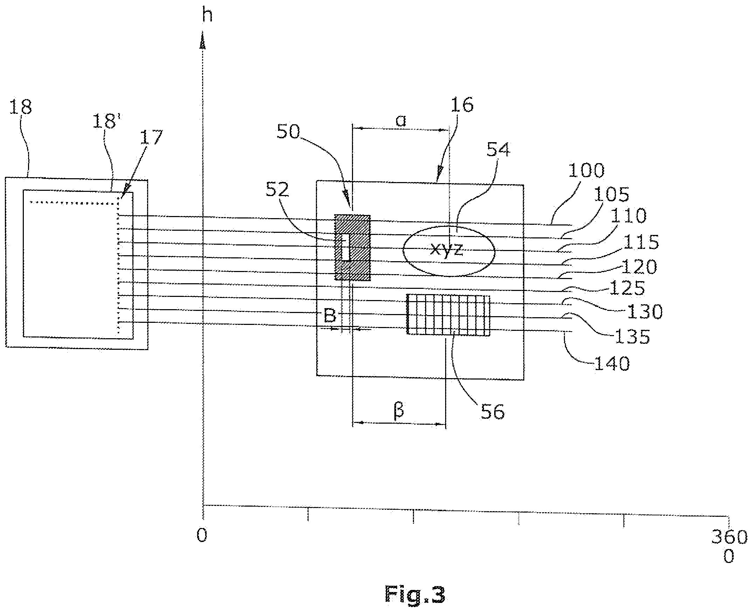

In der Figur 3 sind eine Abwicklung des Etiketts 16 einer in den Küvettenschacht 15 eingestellten Küvette 12 und die Digitalkamera 18 schematisch dargestellt. Die als Flächenkamera ausgebildete Digitalkamera 18 weist einen als CCD-Chip 18' auf, der beispielsweise eine Auflösung von 320 x 320 Pixeln aufweist, also 320 Zeilen und 320 Spalten aufweist.

Zum Suchen des Lokalisierungsbalkens 50 wird nur eine einzige Spalte 17 des CCD-Chips 18' aktiviert. In dieser Spalte 17 werden nur neun nicht aneinandergrenzende Zeilen 100,105,110,115,120,125,130,135,140 aktiviert beziehungsweise durch das Kennzeichnungs-Suchmodul 28 ausgelesen, die jeweils durch achtunddreißig nicht-aktive Zeilen voneinander beabstandet sind.

Zum Suchen des Lokalisierungsbalkens 50 dreht die von der Zentraleinheit 30 gesteuerte Küvettendrehvorrichtung 21 die mit einer Wasserprobe gefüllte und in den Küvettenschacht 15 eingesetzte Küvette 12 in dem Küvettenschacht 15 mit konstanter Drehgeschwindigkeit, während gleichzeitig die neun aktiven Zeilen 100,105,110,115,120,125,130,135,140 der Digitalkamera 18 gelesen und durch das Kennzeichnung-Suchmodul 28 ausgewertet werden. Sobald hierbei für vier zueinander benachbarte aktive Einlese-Zeilen 105,110,115,120 annähernd axial übereinanderliegende Reflektionssignale des Lokalisierungsbalkens 50 in der Balkenbreite B festgestellt werden, wird davon ausgegangen, dass der Lokalisierungsbalken 50 beziehungsweise der weiße Lokalisierungsbalken-Streifen 52 gefunden wurde. Dies wird von dem Kennzeichnung-Suchmodul 28 an die Zentraleinheit 30 gemeldet.

Anschließend wird die Küvette 12 durch die Küvettendrehvorrichtung 21 um den Zuordnungs-Winkel α der im folgenden einzulesenden ersten Kennzeichnung 54 verdreht, um die erste Kennzeichnung 54 mit der Digitalkamera 18 zum Lesen der ersten Kennzeichnung 54 auszurichten. In dem in der Figur 3 dargestellten Beispiel gibt der Zuordnungs-Winkel α den rotatorischen Abstand zu der mittleren Symmetrieachse der Kennzeichnung 54 an. Der Zuordnungs-Winkel kann alternativ auch den rotatorischen Abstand zum linken oder rechten Ende der betreffenden Kennzeichnung angeben, insbesondere dann, wenn die Digitalkamera eine Zeilenkamera ist.

Nachdem im vorliegenden Ausführungsbeispiel die mittlere Symmetrieachse der Kennzeichnung 54 mit der Digitalkamera 18 mittig ausgerichtet ist, wird durch die Digitalkamera 18 ein vollflächiges zweidimensionales Bild der Kennzeichnung 54 eingelesen und von dem Kennzeichnung-Suchmodul 28 beziehungsweise der Zentraleinheit 30 auf Authentizität geprüft. Anschließend oder gleichzeitig kann die zweite und als zweidimensionaler Barcode ausgebildete Kennzeichnung 56 eingelesen und entsprechend dekodiert werden.

Schließlich wird auf Grundlage der aus der zweiten Kennzeichnung 56 gewonnenen Informationen die Wasserprobe in der Küvette 12 durch Fotometrierung mit Hilfe des Fotometers 19, 20 untersucht.

## Patentansprüche

1. Verfahren zum Auffinden einer optischen Kennzeichnung (54,56) auf einer ein Reagenz (34) enthaltenden zylindrischen Laboranalyse-Küvette (12), die in einen eine Küvettendrehvorrichtung (21) aufweisenden vertikalen Küvettenschacht (15) eines Laboranalysegerätes (14) eingesetzt ist, wobei dem Küvettenschacht (15) eine Digitalkamera (18) mit einer axialen Auflösung von mehr als 10 Zeilen zugeordnet ist, und wobei die Küvette (12) in fester geometrischer Zuordnung zu der Kennzeichnung (54,56) einen axialen Lokalisierungsbalken (50) mit einer festen Balkenbreite aufweist, mit den Verfahrensschritten:
• Einlesen von mindestens vier aktiven und jeweils nicht aneinandergrenzenden Zeilen (100,105,110,115,120, 125,130,135,140) der Digitalkamera (18),
• Suchen der Kennzeichnung:
o wenn mindestens drei zueinander benachbarte aktive Einlese-Zeilen (105,110,115) annähernd axial übereinander liegende Reflektionssignale des Lokalisierungsbalkens (50) in der Balkenbreite (B) aufweisen:
▪ Drehen der Küvette (12) um einen der geometrischen Zuordnung entsprechenden Winkel α,β derart, dass die Kennzeichnung (54,56) mit der Digitalkamera (12) ausgerichtet ist, und
▪ Einlesen der Kennzeichnung (54,56) durch Auslesen mehrerer aneinandergrenzender Zeilen (100-140) der Zeilenkamera (18).

2. Verfahren nach Anspruch 1, wobei beim Einlesen mindestens sechs nicht aneinandergrenzende Zeilen (100,105,110,115,120, 125,130,135,140) eingelesen werden, und beim Ermitteln der rotatorischen Position des Lokalisierungsbalkens (50) mindestens vier zueinander benachbarte Einlese-Zeilen (105,110,115,120) annähernd axial übereinander liegende Reflektionssignale des Lokalisierungsbalkens (50) in der Balkenbreite (B) aufweisen.

3. Verfahren nach einem der vorangegangenen Ansprüche, wobei die Digitalkamera (18) eine Flächenkamera ist, wobei das Einlesen bei stillstehender Küvettendrehvorrichtung (21) erfolgt.

4. Verfahren nach einem der vorangegangenen Ansprüche, wobei der Lokalisierungsbalken (50) als weißer Vertikalstreifen (52) auf schwarzem Grund ausgebildet ist.

5. Verfahren nach einem der vorangegangenen Ansprüche, wobei die Kennzeichnung (56) ein Barcode ist.

6. Verfahren nach einem der vorangegangenen Ansprüche, wobei die Kennzeichnung (54) eine grafische Herkunfts-Kennzeichnung ist.

7. Laborananlyse-Messanordnung (10) mit einem Laboranalysegerät (14) und einer Laboranalyse-Küvette (12),
wobei die Küvette (12) zylindrisch ausgebildet ist, ein Reagenz (34) enthält, das der quantitativen Bestimmung eines Analyts in Wasser dient, und ein Etikett (16) aufweist, das eine Kennzeichnung (54,56) und in fester geometrischer Zuordnung einen vertikalen Lokalisierungsbalken (50) aufweist,
wobei das Laboranalysegerät (14) aufweist:
einen Küvettenschacht (15) zur Aufnahme der Küvette (12),
eine Küvettendrehvorrichtung (21) in dem Küvettenschacht (15),
eine dem Küvettenschacht (15) zugeordnete Digitalkamera (18) mit einer axialen Auflösung von mehr als 10 Zeilen, und eine Steuerung (26) mit einem Kennzeichnungs-Suchmodul (28), das die Küvette (12) um einen der geometrischen Zuordnung entsprechenden Winkel α,β mit Hilfe der Küvettendrehvorrichtung (21) derart dreht, dass die Kennzeichnung (54,56) mit der Digitalkamera (18) ausgerichtet ist, wenn mindestens drei zueinander benachbarte aktive Einlese-Zeilen (105,110,115,120), die nicht unmittelbar aneinander grenzen, annähernd axial übereinander liegende Reflektionssignale des Lokalisierungsbalkens (50) in der Balkenbreite (B) registrieren.

8. Laboranalyse-Messanordnung (10) nach Anspruch 7, wobei die Digitalkamera (18) eine Flächenkamera ist, wobei das Einlesen bei stillstehender Küvettendrehvorrichtung (21) erfolgt.

9. Laboranalyse-Messanordnung (10) nach Anspruch 7 oder 8, wobei der Lokalisierungsbalken (50) als weißer Vertikalstreifen (52) auf schwarzem Grund ausgebildet ist.

10. Laboranalyse-Messanordnung (10) nach einem der Ansprüche 7-9, wobei die Kennzeichnung (56) ein Barcode ist.

11. Laboranalyse-Messanordnung nach einem der Ansprüche 7-10, wobei die Kennzeichnung (54) eine grafische Herkunfts-Kennzeichnung ist.

## Claims

1. A method for locating an optical identification (54, 56) on a cylindrical laboratory analysis cuvette (12) containing a reagent (34), said cuvette being placed in a vertical cuvette chamber (15) of a laboratory analyzer (14) having a cuvette rotating device (21), wherein a digital camera (18) with an axial resolution of more than 10 lines is associated with the cuvette chamber (15), and wherein, in fixed geometric relationship with the identification (54, 56), the cuvette (12) comprises an axial locating bar (50) with a fixed bar width, the method comprising the following steps:
• reading in at least four respectively non-adjacent lines (100, 105, 110, 115, 120, 125, 130, 135, 140) of the digital camera (18),
• searching for the identification:
∘ if at least three mutually successive active read-in lines (105, 110, 115) comprise approximately axially in-line reflection signals with the bar width (B), reflected by the locating bar (50):
▪ rotating the cuvette (12) by an angle α, β corresponding to the geometric relationship, such that the identification (54, 56) is aligned with the digital camera (18), and
▪ reading in the identification (54, 56) by reading out a plurality of adjacent lines (100-140) of the line scan camera (18).

2. The method of claim 1, wherein, upon reading in, at least six non-adjacent lines (100, 105, 110, 115, 120, 125, 130, 135, 140) are read in, and, upon determination of the rotational position of the locating bar (50), at least four mutually successive read-in lines (105, 110, 115, 120) include approximately axially in-line reflection signals with the bar width (B), reflected by the locating bar (50).

3. The method of one of the preceding claims, wherein the digital camera (18) is an area scan camera, the reading being performed while the cuvette rotating device (21) is at standstill.

4. The method of one of the preceding claims, wherein the locating bar (50) is designed as a white vertical strip (52) on a black background.

5. The method of one of the preceding claims, wherein the identification (56) is a barcode.

6. The method of one of the preceding claims, wherein the identification (54) is a graphical identification of origin.

7. A laboratory analysis measuring arrangement (10) comprising a laboratory analyzer (14) and a laboratory analysis cuvette (12),
wherein the cuvette (12) is cylindrical, includes a reagent (34) serving for a quantitative determination of an analyte in water, and comprises a label (16) having an identification (54, 56) and, in a fixed geometrical relationship therewith, a vertical locating bar (50),
wherein the laboratory analyzer (14) comprises:
a cuvette chamber (15) for receiving the cuvette (12),
a cuvette rotating device (21) in the cuvette chamber (15),
a digital camera (18) associated to the cuvette chamber (15) with an axial resolution of more than 10 lines, and
a control (26) comprising an identification search module (28) which, by means of the cuvette rotating device (21), rotates the cuvette (12) about an angle α, β corresponding to the geometric relationship, such that the identification (54, 56) is aligned with the digital camera (18), if at least three mutually successive read-in lines (105, 110, 115, 120) record approximately axially in-line reflection signals with the bar width (B), reflected by the locating bar (50).

8. The laboratory analysis measuring arrangement (10) of claim 7, wherein the digital camera (18) is an area scan camera, the reading being performed while the cuvette rotating device (21) is at standstill.

9. The laboratory analysis measuring arrangement (10) of claim 7 or 8, wherein the locating bar (50) is designed as a white vertical strip (52) on a black background.

10. The laboratory analysis measuring arrangement (10) of one of claims 7 - 9, wherein the identification (56) is a barcode.

11. The laboratory analysis measuring arrangement (10) of one of claims 7 - 10, wherein the identification (54) is a graphical identification of origin.

## Revendications

1. Procédé de recherche d'une caractéristique optique (54, 56) sur une cuve d'analyse de laboratoire (12) cylindrique contenant un réactif (34), ladite cuve étant placée dans un puits de cuve (15) verticale d'un appareil d'analyse de laboratoire (14), le puits de cuve comprenant un dispositif de rotation de cuve (21), le puits de cuve (15) étant associé à une caméra numérique (18) ayant une résolution axiale supérieure à 10 lignes, et la cuve (12) comportant une barre de localisation (50) en relation géométrique fixe par rapport à la caractéristique (54, 56), la largeur de la barre étant fixe, le procédé comportant les étapes suivantes:
• la lecture d'au moins quatre lignes (100, 105, 110, 115, 120, 125, 130, 135, 140) actives et non contiguës de la caméra numérique (18),
• la recherché de la caractéristique :
∘ si au moins trois lignes lues (105, 110, 115) adjacentes actives présentent des signaux de réflexion de la barre de localisation (50) sur la largeur de la barre (B), qui sont approximativement superposées dans la direction axiale:
▪ la rotation de la cuve (12) pour un angle α, β correspondant à la relation géométrique, de sorte que la caractérisation (54, 56) est alignée avec la caméra numérique (18), et
▪ la lecture de la caractéristique (54, 56) par la lecture de plusieurs lignes contiguës (100-140) de la caméra numérique (18).

2. Procédé selon la revendication 1, dans laquelle, lors de la lecture, au moins six lignes (100, 105, 110, 115, 120, 125, 130, 135, 140) non contiguës sont lues et, lors de la détermination de la position de rotation de la barre de localisation (50), au moins quatre lignes lues (105, 110, 115, 120) adjacentes présentent au moins quatre signaux de réflexion de la barre de localisation (50) sur la largeur de la barre (B), qui sont approximativement superposées dans la direction axiale.

3. Procédé selon l'une quelconque des revendications précédentes, dans lequel la caméra numérique (18) est une caméra surfacique, la lecture se faisant avec le dispositif de rotation de cuve (21) à l'arrêt.

4. Procédé selon l'une quelconque des revendications précédentes, dans lequel la barre de localisation (50) est réalisée en forme d'une bande verticale (52) blanche sur fond noir.

5. Procédé selon l'une quelconque des revendications précédentes, dans lequel la caractéristique (56) est un code à barres.

6. Procédé selon l'une quelconque des revendications précédentes, dans lequel la caractéristique (54) est une indication de l'origine graphique.

7. Système de mesurage (10) pour analyse de laboratoire comportant un appareil d'analyse de laboratoire (14) et une cuve d'analyse de laboratoire (12),
ladite cuve (12) étant de forme cylindrique, contient un réactif (34) servant la détermination quantitative d'un analyte dans de l'eau, et comportant un étiquette (16) avec une caractéristique (54, 56) et une barre de localisation (50) verticale en relation géométrique fixe,
l'appareil d'analyse de laboratoire (14) comprenant:
un puits de cuve (15) pour recevoir la cuve (12),
un dispositif de rotation de cuve (21) dans le puits de cuve (15),
une caméra numérique (18) associée au puits de cuve (15), la caméra ayant une résolution axiale supérieure à 10 lignes, et
une commande (26) avec un module (28) de recherche de caractéristiques tournant, à l'aide du dispositif de rotation de cuve (21), la cuve (12) pour un angle α, β correspondant à la relation géométrique, de sorte que la caractérisation (54, 56) est alignée avec la caméra numérique (18), si au moins trois lignes lues (105, 110, 115, 120) adjacentes actives, qui ne sont pas directement contiguës, présentent des signaux de réflexion de la barre de localisation (50) sur la largeur de la barre (B), qui sont approximativement superposées dans la direction axiale.

8. Système de mesurage (10) pour analyse de laboratoire selon la revendication 7, dans lequel la caméra numérique (18) est une caméra surfacique, la lecture se faisant avec le dispositif de rotation de cuve (21) à l'arrêt.

9. Système de mesurage (10) pour analyse de laboratoire selon la revendication 7 ou 8, dans lequel la barre de localisation (50) est réalisée en forme d'une bande verticale (52) blanche sur fond noir.

10. Système de mesurage (10) pour analyse de laboratoire selon l'une quelconque des revendications 7 à 9, dans lequel la caractéristique (56) est un code à barres.

11. Système de mesurage (10) pour analyse de laboratoire selon l'une quelconque des revendications 7 à 10, dans lequel la caractéristique (54) est une indication de l'origine graphique.
